# EUROPEAN PATENT APPLICATION

(11) **EP 4 520 416 A1**
(43) Date of publication of application: **12.03.2025**
(21) Application number: 23196597.1
(22) Date of filing: 11.09.2023
(51) Int. Cl.: B01D 5/00

(54) **PROCESS AND APPARATUS FOR SEPARATING CO2 FROM A FEED STREAM CONTAINING CO2, AT LEAST ONE LIGHTER COMPONENT AND AT LEAST ONE HEAVIER COMPONENT**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: LECLERC, Mathieu, 94503 CHAMPIGNY SUR MARNE (FR); RICCI, Laura, 94503 CHAMPIGNY SUR MARNE (FR); BONIFACIO, Abigail, HOUSTON, 77024 (US); MURINO, Michele, 94503 CHAMPIGNY SUR MARNE (FR)
(74) Representative: Air Liquide

(57) **Abstract**

A process for separating CO2 from a feed stream (1) containing at least CO2 and at least one lighter component chosen among oxygen, nitrogen, argon, methane, CO and hydrogen and at least one component heavier than CO2, comprises cooling the feed stream in a heat exchanger (E1) to a temperature less than -30°C, separation of the cooled feed stream producing a first liquid enriched in CO2 and a first gas depleted in CO2, expanding at least part (16) of the first liquid, producing a second liquid (23), vaporizing the second liquid in the heat exchanger (E1) producing a second gas (25), sending the compressed cooled second gas to the bottom of a scrubber column (K2) and removing a top gas (31) of the scrubber column depleted in the at least one heavier component.

## Description

The present invention relates to a process and an apparatus for separating CO2 from a feed stream containing CO2, at least one lighter component chosen among oxygen, nitrogen, argon, methane, CO and hydrogen and at least one component heavier than CO2. For example, NOx impurities contained in waste gases, such as flue gases need to be separated from the CO2 during carbon capture processes in order to comply with the product specification.

NOx impurities are nitrogen oxides and can include NO and NO2. The term is used here to mean that at least one nitrogen oxide is present.

Such waste gases may be produced by refineries, reformers, steelworks, cement factories, glass manufacture among others.

In the case of carbon capture is performed by partial condensation and/or distillation at temperatures below 0°C, NOx impurities present freezing risks at cold temperatures. Therefore, they have to be removed or at least it must be avoided that they concentrate to the point where they freeze.

In addition, the specification of the final product may require them to be removed. The process of NOx separation has to be reliable enough to ensure that the NOx impurities will not freeze while remaining cost effective, particularly in terms of energy consumption.

Several solutions can be considered to remove NOx from flue gases, for example those of WO200907937. The current invention is particularly adapted for CO2 capture for flue gases (post-combustion or oxy-combustion). In such processes, in some cases:
1. The flue gas containing NOx (mainly as NO) is compressed in a multistage compressor and cooled in its intercoolers. A part of the NO is converted into NO2 due to the presence of oxygen in the flue gas. A part of NO2 reacts with water generating HNO3 (nitric acid) and HNO2 (nitrous acid) that is evacuated from the flue gas as aqueous process condensates.
2. The flue gas is dried through an adsorbent bed. The above conversions (NO to NO2 and to HNO3 and HNO2) also occur partially in the dryers. HNO3 and HNO2 are adsorbed and removed from the flue gas as well as a part of NO and NO2.
3. In post-combustion capture process, other than oxy-combustion, the dry flue gas is also pre-separated in a Pressure Swing Adsorption (PSA) system to remove nitrogen. In absence of water, only the conversion of NO to NO2 occurs partially within the adsorption system. A limited part of NO and NO2 is evacuated with the N2 contained in the flue gas. The remaining and main part is retained in the PSA tail gas which is then compressed in a second multi stage compressor where NO is also partially converted to NO2 due to the presence of oxygen in the tail gas.
4. The compressed dried flue gas is then sent to the cold section of the process. This stream contains NO and/or NO2 whose concentration could still be higher than the required CO2 specification or above the freezing point:
   - Ultimately the produced CO2 is expanded down to around 5.5 bara and - 54.5°C and fully vaporized to generate cold; during this vaporization at low pressure, the NOx concentrate and can reach their solidification point.
   - In order to avoid these issues, the flue gas is partially cooled and sent to a column where it is washed with a part of the produced CO2. In this column, the NO2 is removed as bottom liquid while most of the NO goes through the column.
5. After the column, the conversion of the remaining NO to NO2 is nearly complete since the flue gas is further cooled before reaching the partial condensation step. This NO2 ends up in the final CO2, since NO2 is highly soluble in liquid CO2.
6. From the column, the liquid purge is typically pumped and vaporized under pressure (to avoid freezing) and finally expanded and recycled back to upstream the first compressor in order to recover the CO2 contained in it and most of all to be able to evacuate the NO2 under the HNO3 and HNO2 forms with the water condensates. The purge can pass through a SCR before being injected in the compressor in order to convert back the NO2 to N2 in case HNO3 and HNO2 contents in the condensate have to be minimized. In case the NOx specification in the final CO2 is not stringent, this purge can be pumped and sent to the final product without vaporization that would lead to its freezing.

It has to be noted that all the NOx conversions mentioned above are not controlled but are the result of the conditions of the flue gas all along the process and of the residence time at each step of the process.

The configuration above is published in several documents, related to the Callide pilot plant for instance, such as: "Gas quality impacts, assessment and control in oxy-fuel technology for CCS", Final Report by Terry Wall et al, ANLEC R&D Project 6-0710-0061. https://www.globalccsinstitute.com/archive/hub/publications/169088/gas-quality-impacts-assessment-control-oxy-fuel-technology-ccs.pdf

It can also be found in: US20160313058A1.

When the NOx specification in the CO2 is not stringent, the use of the washing column can be avoided. In order not to freeze the NOx in the CO2 that is expanded at low pressure to generate the cold, a "wet" vaporization is performed, in a shell and tube exchanger (kettle for example) or in a bath, with a liquid purge. This way, the CO2 is never fully vaporized and the NOx content never reaches the freezing point. The liquid purge can be vaporized and recycled back to the inlet compressor or sent to the final CO2 production as described above.

The configuration above is described for instance in FR2993353A1.

### Problems solved by the invention

NOx conversions are the result of the conditions of the flue gas all along the process and of the residence times. Thus, the split between NO and NO2 at the inlet at the column as well as the NO exiting it, not removed with the liquid purge, are not controlled.

The state of the art solution is not robust enough if the NOx specification in the final CO2 is very low. For these cases, the addition of a reactor upstream the column is required where the conversion of NO to NO2 is promoted. Such catalytic reactors can be quite expensive.

Furthermore, the flowrate of the liquid stream that is injected at the top of the column in a process, such as that of FR3127558, is mainly imposed by hydraulic constraints, resulting in a higher flowrate than that just required for the NOx removal. This has a direct impact on the purge flow rate which is the flowrate of bottom liquid removed from the NOx column, which becomes higher than needed. This in turn has a direct consequence on the specific energy consumption since it is finally expanded and recycled upstream the inlet compressor.

The present invention provides a more robust solution without requiring the use of a catalytic reactor and with a lower energy consumption.

According to the invention, there is provided a process for separating CO2 from a feed stream containing at least CO2 and at least one lighter component chosen among oxygen, nitrogen, argon, methane, CO and hydrogen and at least one component heavier than CO2, comprising the following steps:
a) Cooling the feed stream in a heat exchanger to a temperature less than - 30°C or less than -45°C, preferably as low as-55°C, and separation of the cooled feed stream by partial condensation and/or distillation producing a first liquid enriched in CO2 and the at least one heavier component and depleted in the at least one lighter component and a first gas depleted in CO2 and the at least one heavier component and enriched in the at least one lighter component,
b) Expanding at least part of the first liquid, said expansion producing a second liquid,
c) At least partial vaporization of the second liquid in the heat exchanger or an auxiliary heat exchanger producing a second gas,
d) Compression of the second gas up to above 8 bara, preferably above15 bara forming a compressed second gas,
e) Cooling of the compressed second gas in the heat exchanger,
f) Sending the compressed cooled second gas to the bottom of a scrubber column, and
g) Removing a bottom liquid of the scrubber column enriched in the at least one heavier component and containing carbon dioxide and a top gas of the scrubber column depleted in the at least one heavier component.

According to optional aspects of the invention:
- -the top gas of the scrubber column is enriched in carbon dioxide and depleted in the at least one heavier component, the top gas is compressed in a compressor and part of the compressed top gas forms the product of the process.
- -the part of the compressed top gas forming the product is at least in part liquefied and preferably subcooled to form a liquid product.
- -part of the compressed top gas is liquefied in the heat exchanger and sent to the scrubber column as wash liquid.
- -the liquid product is formed by taking part of the compressed top gas liquefied in the heat exchanger.
- -the feed stream is separated by partial condensation and distillation in a distillation column and part of the first liquid is removed from the distillation column, vaporized in the heat exchanger and sent to the bottom of the distillation column.
- -part of the bottom liquid of the distillation column is partially vaporized in an auxiliary heat exchanger producing the second gas and a liquid enriched in the heavier component.
- -at least part of the bottom liquid of the scrubber column is partially vaporized in the auxiliary heat exchanger.
- -the at least part of the bottom liquid of the scrubber column is expanded and then is mixed with the part of the bottom liquid of the distillation column upstream of the auxiliary heat exchanger and the mixture formed is partially vaporized forming the second gas and the liquid enriched in the heavier component.
- -part of the bottom liquid of the distillation column is vaporized in the heat exchanger producing the second gas.
- -the compressed second gas is cooled in step e) to a temperature within 5°C of its dewpoint.
- -the second gas is cooled to below to a temperature close to its dew point, between the dew point and the dew point +25°C
- -the at least one heavier component is an NOx.
- -the bottom liquid of the scrubber column is vaporized in the heat exchanger, preferably after pressurization in a pump.
- -the bottom liquid of the scrubber column is vaporized in a heat exchanger other than the first heat exchanger by indirect heat exchange with an external fluid. According to another aspect of the invention, there is provided an apparatus for separating CO2 from a feed stream containing at least CO2 and at least one lighter component chosen among oxygen, nitrogen, argon, methane, CO and hydrogen and at least one component heavier than CO2, comprising a heat exchanger, means for separation of the cooled feed stream by partial condensation and/or distillation, means for sending the feed stream to be cooled in the heat exchanger to a temperature less than -30°C or less than -45°C, preferably as low as-55°C, means for sending cooled feed stream from the heat exchanger to the separation means to be separated by partial condensation and/or distillation, producing a first liquid enriched in CO2 and the at least one heavier component and depleted in the at least one lighter component and a first gas depleted in CO2 and the at least one heavier component and enriched in the at least one lighter component, expansion means, means for sending at least part of the first liquid to be expanded in the expansion means, said expansion producing a second liquid, means for sending the second liquid to be at least partially vaporized in the heat exchanger or an auxiliary heat exchanger producing a second gas, a compressor, means for sending the second gas to the compressor to be compressed gas up to above 8 bara, preferably above 15 bara forming a compressed second gas, means for sending the compressed second gas from the compressor to the heat exchanger to be cooled, a scrubber column, means for sending the compressed cooled second gas from the heat exchanger to the bottom of the scrubber column, means for removing a bottom liquid of the scrubber column enriched in the at least one heavier component and containing carbon dioxide and for removing a top gas of the scrubber column depleted in the at least one heavier component.

### Invention description

The invention will be described in greater detail with reference to the figures.
Figure 1 shows a process flow diagram of a process according to the invention.
Figure 2 shows a process flow diagram of a process according to the invention.
Figure 3 shows a process flow diagram of a process according to the invention which is a variant of Figure 2.

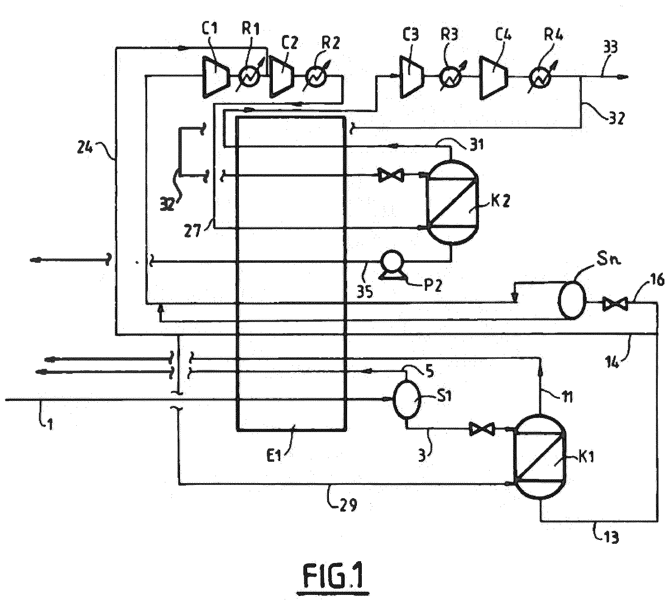

In Figure 1, the process uses a single heat exchanger E1 and a single scrubber column K2. Upstream of the scrubber column K2, two phase separators in series S1 or a phase separator S1 and a distillation column K1 may be used to separate the gas to be treated. Feed stream 1 containing carbon dioxide, at least one NOx and at least one lighter component chosen among oxygen, nitrogen, argon, methane, CO and hydrogen at between 20 and 40 bara is cooled to between -25°C and above -55°C in a heat exchanger E1 in which it condenses partially. The partially condensed stream is separated in a phase separator S1 producing a gas 5 which is carbon dioxide depleted and depleted in the at least one NOx and a liquid 3 which is carbon dioxide enriched and enriched in the at least one NOx.

Gas 5 is warmed in heat exchanger E1 and removed from the process. Liquid 3 is separated by being sent to the top of column K1 producing a bottom liquid 13 enriched in CO2 and NOX and a top gas 11 depleted in CO2 and NOx. The top gas 11 is warmed in exchanger E1 and removed.

In an alternative which is not illustrated, the gas 5 may be partially condensed and sent to a second phase separator, the liquids of both phase separator being sent to the top of column K1.

The first liquid 13 is divided in two, one part 14 being vaporized in the heat exchanger E1 at a higher pressure and the other part 16 being expanded in a valve, separated in separator Sn, the liquid from the separator being vaporised in the heat exchanger E1 at a lower pressure. Stream 14 is divided after vaporization to form a gaseous stream 29 which is sent back to the column K1 as reboil and stream 24 which is sent to the compressor C2. Stream 16 is compressed in a compressor C1 and cooled in cooler R1 and then mixed with stream 24. The mixed stream 27 is compressed in compressor C2 to a pressure above 8bara preferably above 15bara and cooled in cooler R2 and then in heat exchanger E1 before being sent to a scrubber column K2 to remove the at least one NOx.

The mixture stream 27 forms the feed stream for a scrubbing column K2 being fed to the bottom of that column. The mixture 27 has been cooled down to a temperature close to its dewpoint temperature in heat exchanger E1 before being washed in column K2. This means that the NO conversion to NO2 that is favored by cold temperatures has been maximized upstream of the CO2 washing in column K2. The NOx content in the CO2 production gas depleted in NOx 31 is then minimized without the need of adding any reactor to convert NO to NO2 since the removal has been done during the cooling of the feed gas.

The bottom liquid 35 from column K2 forms a purge liquid enriched in the at least one NOx which is pumped in pump P2 and vaporized in the heat exchanger E1.

The top gas 31 of the column K2 is depleted in NOX and is warmed in the heat exchanger E1 before being compressed in compressor C3 and cooled in cooler R3 and then compressed in compressor C4 to a pressure above 15 bara, above the column pressure and cooled in cooler R4. The compressed stream is divided in two, stream 33 forming the NOx depleted product and stream 32 being liquefied in the heat exchanger E1 to form the wash liquid sent to the top of column K2 after expansion.

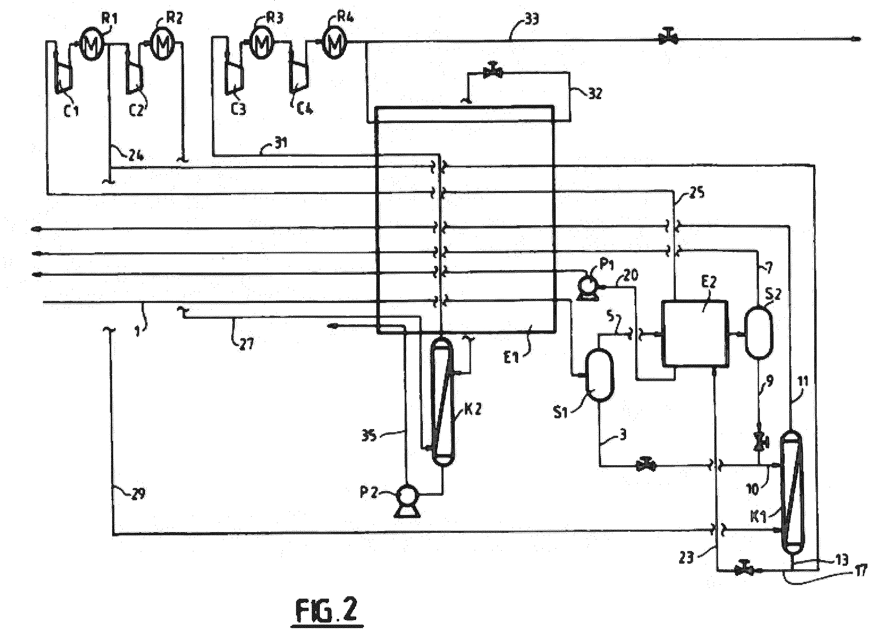

In Figure 2, the process uses heat exchangers E1, E2 and a single scrubber column K2. Upstream of the scrubber column K2, two phase separators in series S1 or a phase separator S1 and a distillation column K1 may be used to separate the gas to be treated. Feed stream 1 containing carbon dioxide, at least one NOx and at least one lighter component chosen among oxygen, nitrogen, argon, methane, CO and hydrogen at between 20 and 40 bara is cooled to between -25°C and -45°C in a first heat exchanger E1 in which it condenses partially. The partially condensed stream is separated in a phase separator S1 producing a gas 5 which is carbon dioxide depleted and depleted in the at least one NOx and a liquid 3 which is carbon dioxide enriched and enriched in the at least one NOx.

Gas 5 is further cooled to condense it in heat exchanger E2 at least partially, forming a liquid 9 and a gas 7 which is warmed in heat exchanger E1 and removed from the process. Liquids 3 and 9 are mixed to form liquid 10 which sent to the top of column K1. A carbon dioxide depleted gaseous stream 11 is removed from the top of column K1 and a liquid 13 enriched in carbon dioxide is removed from the column and divided in two. The first liquid 17 is vaporized in the heat exchanger E1 at a higher pressure and is divided after vaporization to form a gaseous stream 29 which is sent back to the column K1 as reboil and stream 24 which is sent to the compressor C2. The second part is expanded forming expanded liquid 23 which is partially vaporized in heat exchanger E2 forming stream 25 which is warmed in heat exchanger E1 and is compressed in a compressor C1 and cooled in cooler R1 and then mixed with part 24 of stream 13. The mixed stream is compressed in compressor C2 to a pressure above 8 bara, preferably above 15 and cooled in cooler R2 and then in heat exchanger E1 to a temperature close to its dew point, between dew point and dew point +25°C before being sent to a scrubber column K2 to remove the at least one NOx as stream 27.

The NO conversion to NO2 that is favored by cold temperatures has been maximized upstream of the CO2 washing in column K2. The NOx content in the CO2 production gas depleted in NOx 31 is then minimized without the need of adding any reactor to convert NO to NO2 since the removal has been done during the cooling of the feed gas.

The bottom liquid 35 from column K2 forms a purge liquid rich in the at least one NOx which is pumped in pump P2 and vaporized in the heat exchanger E1.

The top gas 31 of the column K2 is depleted in NOX and is warmed in the heat exchanger E1 before being compressed in compressor C3 and cooled in cooler R3 and then compressed in compressor C4 and cooled in cooler R4. The compressed stream is divided in two, stream 33 forming the NOx depleted product and stream 32 being liquefied in the heat exchanger E2 to form the wash liquid sent to the top of column K2 after expansion.

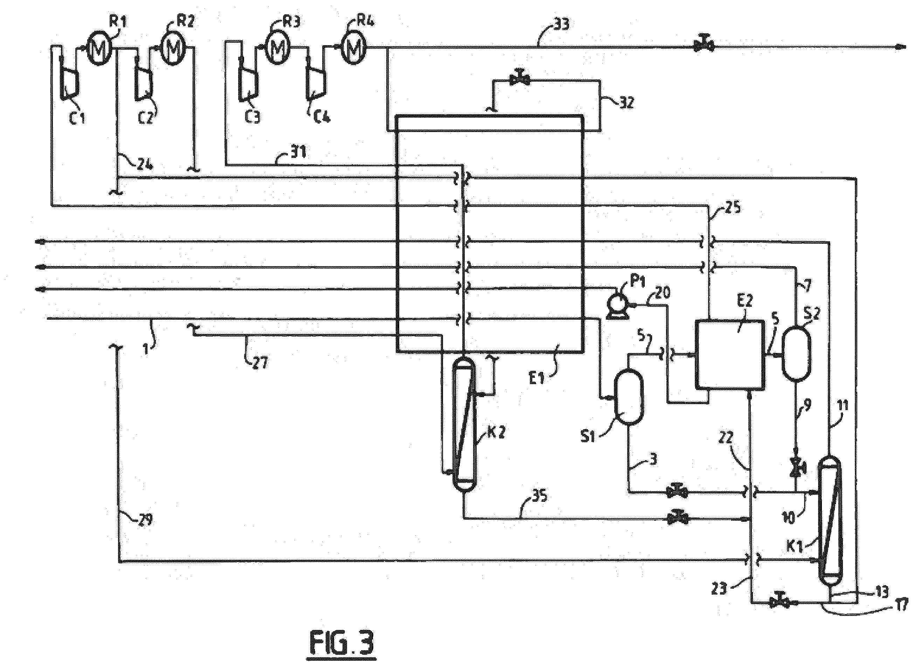

In Figure 3, which is a variant of Figure 2, the bottom liquid 35 from column K2 forms a second purge liquid and is mixed with stream 23 to provide refrigeration for auxiliary heat exchanger E2 as liquid 22.

The liquid 22 is partially vaporized leaving a purge liquid 20 which is pressurized in pump P1 and vaporized in the heat exchanger E1. The gas 25 formed by vaporizing liquid 22 in heat exchanger E2 is the feed for compressor C1.

Either at least part of liquid 35 or at least part of liquid 23 or at least part of the mixture of liquids 23 and 35 can constitute the liquid used to cool the second heat exchanger E2.

The liquid 22, 23 is used as source of cold for the second exchanger E2 where the liquid is only partially vaporized in order to avoid reaching the NOx solidification point in the exchanger E2, generating a residual liquid 20 and a CO2 production gas 25. By combining the purge 35 of the column K2 with liquid 23 to be partially vaporized, the resulting overall purge flow 20 can be controlled by adapting the flow 22 that is sent to the partial vaporization. In the state of the art configuration, it is the result of the operation of the column while in the configuration of the invention, the partial vaporization can act as a concentrator up to the value at which the NOx will start to freeze (allowing for a safety margin) minimizing the amount that is recycled at the inlet of the compressor C1, C2 and then minimizing the energy consumption.

The residual liquid 20 is purged from the second heat exchanger E2, pumping it to a pressure sufficiently high to allow it to be vaporized without freezing and recycling it upstream the cold process to a point where the NOx can be removed.

The liquid flowrate 22, 23 sent to the second heat exchanger E2 can be adjusted in order to increase the first residual liquid flowrate removed as a purge 20 and thus to dilute the at least one NOx sufficiently, avoiding it to freeze.

As typical variants:
- a stripping column K1 can be used between steps 3 and 4 in order to remove from the CO2 the light components such as oxygen.
- the produced CO2 liquid can be used to generate cold at another temperature in the first heat exchanger and the resulting vaporized streams compressed in the same CO2 compressor of step 6

In this solution, only the final pre purified CO2 27, whose flow rate is lower than the feed gas flowrate 1, is washed in the column K2. Thus, the amount of liquid 32 required to wash it is reduced as compared to the prior art, limiting also the purge flow 20 that is recycled to the upstream process.

Whilst C1, C2, C3, C4 are referred to as compressors, it will be understood that they can be stages of a compressor comprising at least two stages C1, C2, C3, C4.

In the example, the component heavier than CO2 is at least one NOx, but it will be appreciated that this component may be another component such as a hydrocarbon, mercury...

In all cases, the gaseous product 33 can be liquefied and preferably subcooled to form a liquid product.

The bottom liquid of the scrubber column can be vaporized in a heat exchanger other than the heat exchanger E1 by indirect heat exchange with an external fluid, for example a gas, steam, water, oil...

## Claims

1. Process for separating CO2 from a feed stream (1) containing at least CO2 and at least one lighter component chosen among oxygen, nitrogen, argon, methane, CO and hydrogen and at least one component heavier than CO2, comprising the following steps:
a) Cooling the feed stream in a heat exchanger (E1) to a temperature less than - 30°C or less than -45°C, preferably as low as-55°C, and separation of the cooled feed stream by partial condensation (S1) and/or distillation (K1) producing a first liquid enriched in CO2 and the at least one heavier component and depleted in the at least one lighter component (13) and a first gas depleted in CO2 and the at least one heavier component and enriched in the at least one lighter component (11),
b) Expanding at least part (16) of the first liquid, said expansion producing a second liquid (23),
c) At least partial vaporization of the second liquid in the heat exchanger (E1) or an auxiliary heat exchanger (E2) producing a second gas (25),
d) Compression (C1, C2) of the second gas up to above 8bara, preferably above15 bara forming a compressed second gas (27),
e) Cooling of the compressed second gas in the heat exchanger,
f) Sending the compressed cooled second gas to the bottom of a scrubber column (K2) and
g) Removing a bottom liquid (35) of the scrubber column enriched in the at least one heavier component and containing carbon dioxide and a top gas (31) of the scrubber column depleted in the at least one heavier component.

2. Process according to Claim 1 wherein the top gas (31) of the scrubber column is enriched in carbon dioxide and depleted in the at least one heavier component, the top gas is compressed in a compressor (C3, C4) and part (33) of the compressed top gas forms the product of the process.

3. Process according to Claim 2 wherein the part of the compressed top gas forming the product is at least in part liquefied and preferably subcooled to form a liquid product.

4. Process according to Claim 2 or 3 wherein part (32) of the compressed top gas is liquefied in the heat exchanger (E1) and sent to the scrubber column (K2) as wash liquid.

5. Process according to any preceding claim wherein the feed stream (1) is separated by partial condensation and distillation in a distillation column (K1) and part of the first liquid is removed from the distillation column, vaporized in the heat exchanger and sent (29) to the bottom of the distillation column.

6. Process according to one of claims 1 to 5 wherein part of the bottom liquid of the distillation column is partially vaporized in an auxiliary heat exchanger (E2) producing the second gas (25) and a liquid (20) enriched in the heavier component.

7. Process according to one of claims 1 to 6 wherein at least part of the bottom liquid (35) of the scrubber column (K2) is partially vaporized in the auxiliary heat exchanger (E2).

8. Process according to claim 6 wherein the at least part of the bottom liquid of the scrubber column is expanded and then is mixed with the part (23) of the bottom liquid of the distillation column (K1) upstream of the auxiliary heat exchanger (E2) and the mixture (22) formed is partially vaporized forming the second gas (25) and the liquid enriched in the heavier component (20).

9. Process according to one of claims 1 to 8 wherein part (23) of the bottom liquid of the distillation column (K1) is vaporized in the heat exchanger (E1, E2) producing the second gas (25).

10. Process according to any preceding claim wherein the compressed second gas (27) is cooled in step e) to a temperature within 5°C of its dew point.

11. Process according to any preceding claim wherein the second gas (27) is cooled to below to a temperature close to its dew point, between the dew point and the dew point +25°C

12. Process according to any preceding claim wherein the at least one heavier component is an NOx.

13. Process according to any preceding claim in which the bottom liquid (35) of the scrubber column (K2) is vaporized in the heat exchanger (E1), preferably after pressurization in a pump (P2).

14. Process according to any of claims 1 to 12 wherein the bottom liquid (35) of the scrubber column (K2) is vaporized in a heat exchanger other than the first heat exchanger by indirect heat exchange with an external fluid.

15. Apparatus for separating CO2 from a feed stream (1) containing at least CO2 and at least one lighter component chosen among oxygen, nitrogen, argon, methane, CO and hydrogen and at least one component heavier than CO2, comprising a heat exchanger (E1), means for separation of the cooled feed stream by partial condensation (S1) and/or distillation (K1), means for sending the feed stream to be cooled in the heat exchanger (E1) to a temperature less than -30°C or less than -45°C, preferably as low as-55°C, means for sending cooled feed stream from the heat exchanger to the separation means to be separated by partial condensation (S1) and/or distillation (K1) producing a first liquid enriched in CO2 and the at least one heavier component and depleted in the at least one lighter component (13) and a first gas depleted in CO2 and the at least one heavier component and enriched in the at least one lighter component (11), expansion means, means for sending at least part (16) of the first liquid to be expanded in the expansion means, said expansion producing a second liquid (23), means for sending the second liquid to be at least partially vaporized in the heat exchanger (E1) or an auxiliary heat exchanger (E2) producing a second gas (25), a compressor (C1, C2), means for sending the second gas to the compressor to be compressed gas up to above8bara, preferably above 15 bara forming a compressed second gas (27), means for sending the compressed second gas from the compressor to the heat exchanger to be cooled, a scrubber column (K2), means for sending the compressed cooled second gas from the heat exchanger to the bottom of the scrubber column, means for removing a bottom liquid (35) of the scrubber column enriched in the at least one heavier component and containing carbon dioxide and for removing a top gas (31) of the scrubber column depleted in the at least one heavier component.
